# EUROPÄISCHE PATENTSCHRIFT

(11) **EP 1 819 936 B1**
(45) Veröffentlichungstag und Bekanntmachung des Hinweises auf die Patenterteilung: **07.10.2009**
(21) Anmeldenummer: 05812370.4
(22) Anmeldetag: 02.12.2005
(51) Int. Cl.: F16D 65/14

(54) **SCHEIBENBREMSE FÜR EIN FAHRZEUG**
DISK BRAKE FOR A VEHICLE
FREIN A DISQUES POUR UN VEHICULE A MOTEUR

(30) Priorität: 03.12.2004 DE 102004058433
(43) Veröffentlichungstag der Anmeldung: 22.08.2007
(73) Patentinhaber: KNORR-BREMSE Systeme für Nutzfahrzeuge GmbH, 80809 München (DE)
(72) Erfinder: LÖW, Alfred, 94094 Rotthalmünster (DE)
(74) Vertreter: Mattusch, Gundula
(86) Internationale Anmeldenummer: PCT/EP2005/012929
(87) Internationale Veröffentlichungsnummer: WO 2006/058784

(56) Entgegenhaltungen:
- WO-A-00/09908
- DE-A1- 4 212 384
- US-A- 6 105 734
- US-A1- 2002 007 989

## Beschreibung

Die vorliegende Erfindung betrifft eine Scheibenbremse für ein Fahrzeug, insbesondere ein Nutzfahrzeug, mit einer in einem Bremssattel angeordneten Zuspannvorrichtung, mit der bei einer Bremsung über eine oder zwei parallel und mit Abstand zueinander in einer Brücke angeordnete Stellspindeln ein Bremsbelag an eine Bremsscheibe drückbar ist, wobei die Zuspannvorrichtung mit einem schwenkbaren Hebel versehen ist, der im Abstützbereich mit Drehlagern des Bremssattels als Exzenter mit einer einstückig angeformten Wälzrolle ausgebildet ist, die mit der Brücke in Wirkverbindung steht.

Eine derartige, vorzugsweise druckluft- oder elektronisch betätigbare Scheibenbremse ist aus der DE 42 12 384 A1 und der EP 0 688 404 B1 bekannt.

In letzterer ist als ein Ausführungsbeispiel zu den Figuren 7 und 8 beschrieben, dass der Exzenter eine einstückig angeformte Wälzrolle aufweist, die mit der Brücke in Wirkverbindung steht.

Dabei kann diese Wälzrolle beispielsweise durch Schmieden angeformt sein. Zweckmäßigerweise besteht sie aus gehärtetem Stahl, um den auftretenden Belastungen zu entsprechen, so dass eine erstrebenswerte Standzeit erreichbar ist.

Dabei stützt sich die Wälzrolle in einem in der Brücke angeordneten Gegenlager ab; das rinnenförmig ausgebildet sein kann bzw. in einer anderen Ausführung als eine Kombination aus einer ebenen Platte, die an der Brücke anliegt, und einem darauf befindlichen Druckstück, an dem sich die Wälzrolle abstützt.

In jedem Fall ist das Herstellen und Montieren der Gegenlager mit einem erheblichen Aufwand verbunden, der einer rationellen und kostengünstigen Fertigung entgegensteht.

Dies ist insbesondere unter dem Aspekt bedeutsam, als solche Scheibenbremsen in großen Stückzahlen Verwendung finden und von daher eine Kostenoptimierung immer angestrebt wird.

Der vorliegenden Erfindung liegt daher die Aufgabe zugrunde, eine Scheibenbremse der gattungsgemäßen Art so weiter zu entwickeln, dass sie einfacher herstell- und montierbar ist und dadurch die Kosten insgesamt gesenkt werden.

Diese Aufgabe wird durch eine Scheibenbremse gelöst, die die Merkmale des Anspruchs 1 aufweist. Insbesondere kann derart auf ein Gleitlager zwischen der Brücke und der Wälzrolle verzichtet werden.

Eine in diesem Sinne ausgebildete Scheibenbremse bietet gegenüber einer solchen nach dem Stand der Technik wesentliche Vorteile, insbesondere hinsichtlich der Herstellung und Montage.

Durch den Verzicht auf ein separates Teil als Drehlager entfallen die hierfür erforderlichen Herstellungskosten, die insbesondere aufgrund der konkav rinnenartigen Formgebung relativ hoch sind. Dies betrifft gleichermaßen die Ausführungsform, bei der das Gegenlager plattenförmig ausgebildet und mit einem zur Wälzrolle hin angeordneten Druckstück versehen ist.

Es ist davon auszugehen, dass die Notlaufeigenschaften des Gussmaterials, aus dem die Brücke standardmäßig hergestellt ist, in Verbindung mit der aus Stahl bestehenden, vorzugsweise geschmiedeten und gehärteten Wälzrolle den Anforderungen an ein Gleitlager in ausreichendem Maße entspricht.

Diese Eigenschaften können noch dadurch verbessert werden, dass die Lagerstelle, also vor allem die Brücke im Kontaktbereich mit der Wälzrolle gefettet wird, wobei dies einmalig bei der Montage ausreicht.

Nach einer vorteilhaften Weiterbildung der Erfindung ist vorgesehen, die Brücke mit einer konkaven Ausnehmung zu versehen, in der die Wälzrolle einliegt. Hierbei kann die Ausnehmung bereits eingegossen sein, so dass eine aufwändige nachträgliche Bearbeitung entfallen kann. Als zusätzliches Fettdepot können in der Ausnehmung Fetttaschen angeordnet sein, die beim erst- und einmaligen Fetten mit Fett gefüllt werden, so dass in jedem Fall eine ausreichende Schmierung gewährleistet ist.

Anstelle einer solchen konkaven Ausnehmung besteht auch die Möglichkeit die Brücke im Kontaktbereich mit der Wälzrolle als plane Fläche auszubilden, auf der sich die Wälzrolle abwälzen kann. Hierbei ist die Lagerstelle, also die plane Fläche insgesamt gefettet. Für ein einwandfreies Abwälzen der Wälzrolle ist die Lagerstelle plangefräst.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: den schematischen Aufbau einer erfindungsgemäßen Scheibenbremse in einer geschnittenen Seitenansicht
- Figur 2: die Scheibenbremse in einer teilweise geschnittenen Draufsicht
- Figuren 3 und 4: jeweils ein Ausführungsbeispiel der Erfindung in einer schematischen Seitenansicht
- Figur 5: ein weiteres Ausführungsbeispiel der Erfindung in einer schematischen Seitenansicht

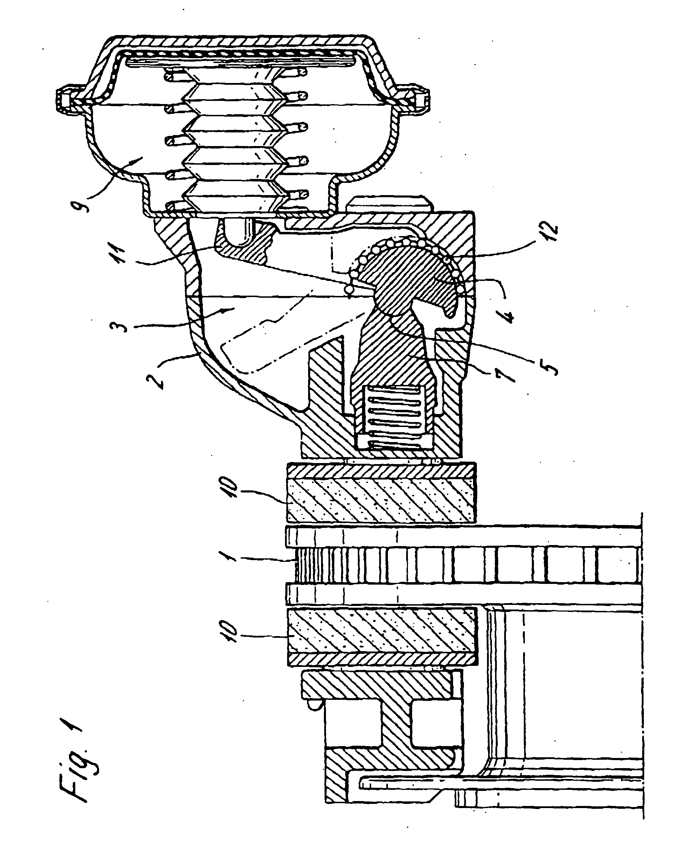

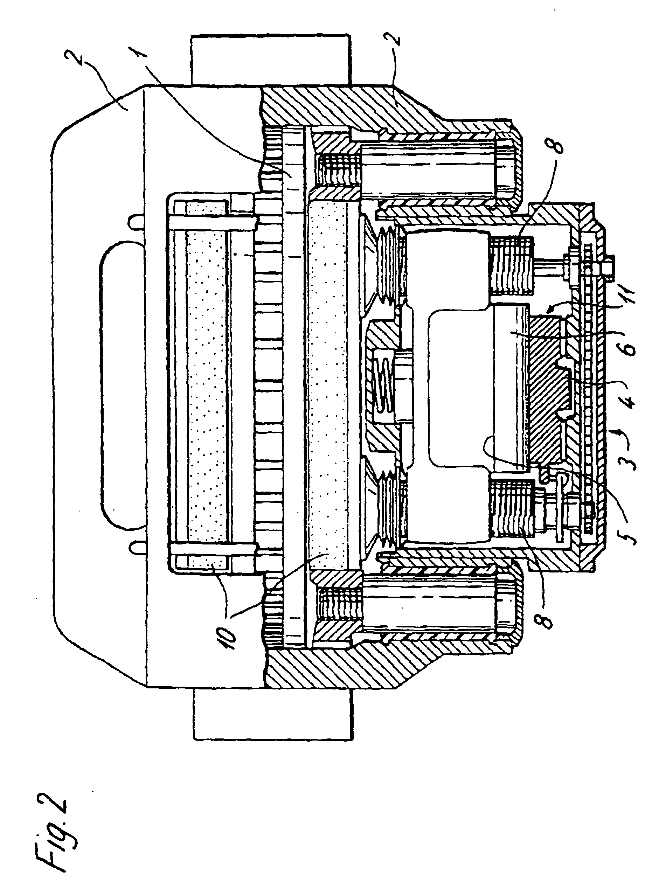

In den Figuren 1 und 2 ist eine Scheibenbremse für ein Fahrzeug, insbesondere ein Nutzfahrzeug gezeigt, die eine Bremsscheibe 1 aufweist, die an einer nicht dargestellten Achse des Nutzfahrzeuges befestigt ist und von einem Bremssattel 2 umfasst ist, der in Richtung der Bremsscheibe 1 verschiebbar ist.

Im Bremssattel 2 ist eine Zuspannvorrichtung 3 angeordnet, mit der bei einer über einen vorzugsweise pneumatisch betätigten Bremszylinder 9 ausgelösten Bremsung Bremsbeläge 10 an die Bremsscheibe 1 drückbar sind.

Hierzu greift die Zuspannvorrichtung 3 an zwei parallel und mit Abstand zueinander in einer Brücke 7 angeordnete Stellspindeln 8 an.

Wie weiter zu sehen ist, weist die Zuspannvorrichtung 3 einen schwenkbaren Hebel 11 auf, der mit seinem einen Ende mit dem Bremszylinder 9 in Wirkverbindung steht und in seinem anderen Endbereich schwenkbar in einem Drehlager 12 des Bremssattels 2 gelagert ist.

Dieser Endbereich ist als Exzenter 4 ausgebildet, wozu außermittig zur gedachten Mittenachse des Drehlagers 12 einstückig eine Wälzrolle 6 an den Exzenter 4 angeformt ist.

Diese Wälzrolle 6 stützt sich an einem Gegenlager 5 der als Gussteil ausgebildeten Brücke 7 ab.

Erfindungsgemäß liegt die am Exzenter 4 angeformte Wälzrolle 6 unmittelbar an der Brücke 7, das heißt, an dem gebildeten Gegenlager 5 an, wobei dieses Gegenlager 5 gefettet ist, so dass ein auch dauerhaft einwandfreies Abrollen der Wälzrolle 6 auf dem Gegenlager 5 gewährleistet ist.

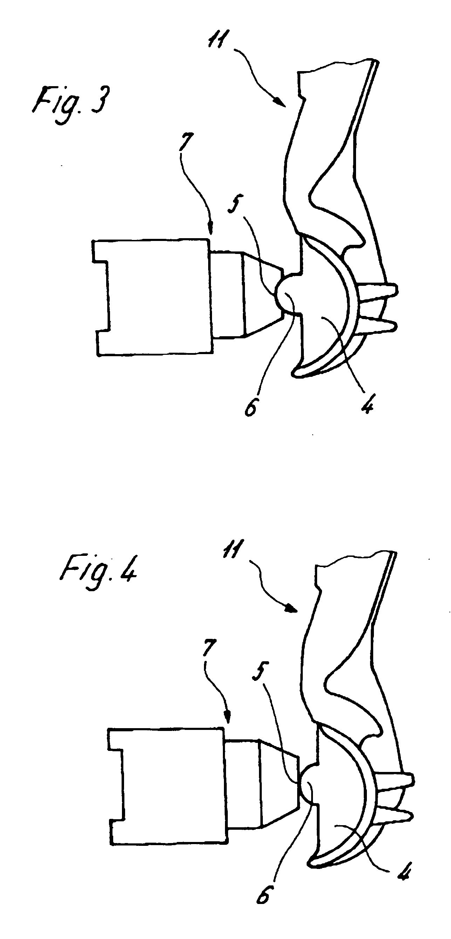

Wie insbesondere die Figur 3 sehr deutlich wiedergibt, besteht das Gegenlager 5 aus einer rinnenförmigen, im Querschnitt konkaven Ausnehmung, deren Krümmung der Krümmung der Wälzrolle 6 angepasst ist.

Bei dem in der Figur 4 gezeigten Ausführungsbeispiel ist das Gegenlager 5 als plane Fläche ausgebildet, an der die Wälzrolle 6 bei Betätigung des Hebels 11, also bei dessen Verschwenkung, abrollt. Diese plane Fläche ist besonders einfach zu bearbeiten, beispielsweise durch Planfräsen, woraus sich fertigungstechnische Vorteile ergeben.

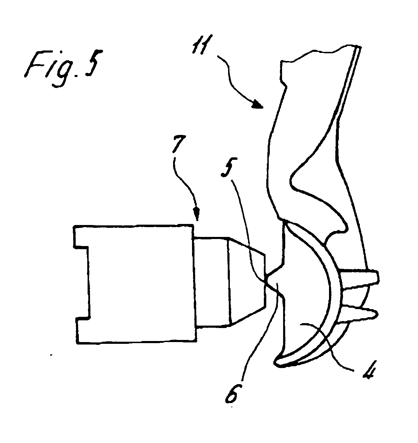

Ebenfalls als plane Fläche ausgebildet ist das Gegenlager 5 bei dem Beispiel entsprechend der Figur 5.

Die Wälzrolle 6 hingegen ist in ihrem Querschnitt als angeschmiedeter Nocken ausgebildet, der sich ebenso wie die übrigen Wälzrollen 6 über die gesamte Breite des Hebels erstrecken. Im Bedarfsfall kann das Gegenlager 5 gehärtet sein.

## Patentansprüche

1. Scheibenbremse für ein Fahrzeug, insbesondere ein Nutzfahrzeug, mit einer in einem Bremssattel (2) angeordneten Zuspannvorrichtung (3), mit der bei einer Bremsung über eine oder zwei parallel und mit Abstand zueinander in einer Brücke (7) angeordnete Stellspindeln (8) ein Bremsbelag (10) an eine Bremsscheibe (1) drückbar ist, wobei die Zuspannvorrichtung (3) mit einem schwenkbaren Hebel (11) versehen ist, der im Abstützbereich mit Drehlagern (12) des Bremssattels (2) als Exzenter (4) mit einer einstückig angeformten Wälzrolle (6) ausgebildet ist, die mit der Brücke (7) in Wirkverbindung steht, **dadurch gekennzeichnet, dass** die Wälzrolle (6) unmittelbar an der Brücke (7) anliegt.

2. Scheibenbremse nach Anspruch 1, **dadurch gekennzeichnet, dass** die Brücke (7) im Andruckbereich der Wälzrolle (6) ein Gegenlager (5) bildet, das als rinnenförmige, im Querschnitt konkave Ausnehmung gestaltet ist, deren Krümmung an die Krümmung der Wälzrolle (6) angepasst ist.

3. Scheibenbremse nach Anspruch 1 oder 2, **dadurch gekennzeichnet, dass** das Gegenlager (5) aus einer planen Fläche gebildet ist, an der sich die Wälzrolle (6) abstützt.

4. Scheibenbremse nach einem der vorhergehenden Ansprüche, **dadurch gekennzeichnet, dass** das Gegenlager (5) gefettet ist.

5. Scheibenbremse nach einem der vorhergehenden Ansprüche, **dadurch gekennzeichnet, dass** das als plane Fläche ausgebildete Gegenlager (5) plangefräst ist.

6. Scheibenbremse nach einem der vorhergehenden Ansprüche, **dadurch gekennzeichnet, dass** im Gegenlager (5) Fetttaschen vorgesehen sind, die vorzugsweise vor einer Montage mit Fett füllbar sind.

7. Scheibenbremse nach einem der vorhergehenden Ansprüche, **dadurch gekennzeichnet, dass** die Wälzrolle (6) im Querschnitt gesehen als Nocken ausgebildet ist.

## Claims

1. Disc brake for a vehicle, in particular a utility vehicle, with an application device (23) arranged in a brake caliper (20 by means of which, during a braking operation, a brake pad (10) can be pressed against a brake disc (1) by a control spindle (8) or by two control spindles arranged in a bridge (7) parallel to and a distance apart from one another, the said application device (3) being provided with a pivoting lever (11) which is formed in its support area with rotary bearings (12) of the brake caliper (2) as an eccentric (4) with an integrally formed roller element (6) in active connection with the bridge (7), **characterised in that** the roller element (6) is directly in contact with the bridge (7).

2. Disc brake according to Claim 1, **characterised in that** in the contact pressure area of the roller element (6) the bridge (7) forms an abutment block designed as a channel-shaped recess with a concave cross-section, whose curvature matches the curvature of the roller element (6).

3. Disc brake according to Claims I or 2, **characterised in that** the abutment block is formed as a flat surface against which the roller element (6) rests.

4. Disc brake according to any of the preceding claims, **characterised in that** the abutment block (5) is greased.

5. Disc brake according to any of the preceding claims, **characterised in that** the abutment block (5) made as a flat surface is face-milled.

6. Disc brake according to any of the preceding claims, **characterised in that** grease pockets are provided in the abutment block (5), which can preferably be filled with grease before assembly.

7. Disc brake according to any of the preceding claims, **characterised in that** viewed in cross-section, the roller element (6) is shaped as a cam.

## Revendications

1. Frein à disque pour un véhicule automobile, notamment pour un véhicule utilitaire, comprenant un dispositif (3) de serrage, qui est monté dans un étrier (2) de frein et par lequel, lors du freinage, une garniture (10) de frein peut, par une ou par deux broches (8) de réglage parallèles et disposées à distance l'une de l'autre en un pontet (7), être repoussée sur un disque (1) de frein, le dispositif (3) de serrage étant muni d'un levier (11) pivotant, qui est constitué dans la zone d'appui en ayant des coussinets (12) de pivotement de l'étrier (2) de frein, en excentrique (4) ayant un rouleau (6) de roulement qui est d'une seule pièce et qui est en interaction avec le pontet (7), **caractérisé en ce que** le rouleau (6) de roulement s'applique directement au pontet (7).

2. Frein à disque suivant la revendication 1, **caractérisé en ce que** le pontet (7) forme, dans la partie d'application d'une pression du rouleau (6) de roulement, une butée (5) qui est conformée en évidement en forme de nervure de section transversale concave, dont la courbure est adaptée à la courbure du rouleau (6) de roulement.

3. Frein à disque suivant la revendication 1 ou 2, **caractérisé en ce que** la butée (5) est formée d'une surface plane sur laquelle s'appuie le rouleau (6) de roulement.

4. Frein à disque suivant l'une des revendications précédentes, **caractérisé en ce que** la butée (5) est graissée.

5. Frein à disque l'une des revendications précédentes, **caractérisé en ce que** la butée (5) est constituée en surface plane par fraisage plan.

6. Frein à disque suivant l'une des revendications précédentes, **caractérisé en ce qu'**il est prévu dans la butée (5) des poches de graissage, qui peuvent être emplies de graisse, de préférence avant un montage.

7. Frein à disque suivant l'une des revendications précédentes, **caractérisé en ce que** le rouleau (6) de roulement est constitué, vu en section transversale, sous la forme d'un bossage.
